## Europäisches Patentamt

(19) **European Patent Office**

**Office européen des brevets**

(11) Publication number: **0 267 436**
**B1**

(12) **EUROPEAN PATENT SPECIFICATION**

(45) Date of publication of the patent specification:
**31.01.90**

(51) Int. Cl.⁴: **F16H 55/06, B29D 15/00**

(21) Application number: **87114825.0**

(22) Date of filing: **10.10.87**

(54) **Gear wheel.**

(30) Priority: **27.10.86 SE 8604569**

(73) Proprietor: **SKF Nova AB, S-415 50 Göteborg(SE)**

(43) Date of publication of application:
**18.05.88 Bulletin 88/20**

(72) Inventor: **Hallerbäck, Stig, Blodboksgatan 12,
S-421 74 Västra Frölunda(SE)**

(45) Publication of the grant of the patent:
**31.01.90 Bulletin 90/5**

(84) Designated Contracting States:
**DE FR GB IT**

(56) References cited:
**DE-U- 1 774 617**
**FR-A- 1 030 239**
**US-A- 2 971 356**
**US-A- 3 237 480**
**US-A- 3 733 921**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention refers to a gear wheel of plastic material and particularly such wheels intended for cooperation with a toothed driving belt as set out in the first part of claim 1. The invention also incorporates a method at production of such gear wheels.

Gear wheels having reinforament means as set out in the first part of claim 1 are e.g. known from US-A 3 733 921 or FR-A 1 030 239 or DE-U 1 774 617.

Gear wheels are a commonly known machine member, known in an immense number of different embodiments. They all incorporate a rim of teeth, which are intended to cooperate either with corresponding teeth on adjacent gear wheels or with teeth on a toothed driving belt or the like. In the latter case these teeth are rule shaped and have an axial extension allowing them to cooperate with transverse teeth on the driving belt.

The gear wheels are commonly made from cast iron or steel. The requirements on the design and machining of the teeth are always high. In the latter case, as mentioned above, when the teeth are rule shaped, it is necessary that they are precision machined by milling or the like, thus that they are given an accurate shape and thereby in a satisfactory manner can cooperate with the transverse teeth of the driving belt.

At gear wheels, which shall cooperate with driving belts, it is often a desire that the gear wheel rim is provided with flange on one or both sides for securing that the driving belt shall not disengage from the the gear wheel. As the teeth one to be precision machined in a milling opertation it is difficult or even impossible to provide the gear rim with the flange prior to the milling operation. In such cases use is therefore made of separate flanges, which after precision machining are fitted in grooves on the side of the the gear rim. Gear produced in this manner and from the above mentioned materials are heavy and expensive to produce.

It since long has been a desire to be able to mould gear wheels directly without subsequent machining and from a low weight material. Different types of plastic material then has been considered, but the plastic material has the property that its coefficient of thermal expansion is much bigger than that of steel and cast iron, whereby unacceptable dimension changes will arise in connection with temperature changes, as other parts in the vicinity of the plastic material usually consist of steel or cast iron.

This problem has however been solved by the present invention and it has been possible to meet the earlier desires by providing a gear wheel as set out in claim 1.

According to the invention the hub of the toothed wheel may be axially displaced in relation to the toothed wheel rim, and also the hub may incorporate a helix of steel or another material with a desired coefficient of thermal expansion and such a strength, that it has the ability of determining the coefficient of thermal expansion of the entire hub.

The invention further incorporates a method for production of a gear wheel, which involves that a helix of a material having a desired coefficient of thermal expansion is inserted into a mould, having a somewhat smaller circumferential diameter than the helix, whereupon the mould is filled with the moulding material, which is brought to become stiff or to cure.

For securing that the helical spring is entirely embedded in the plastic material it is according to the invention appropriate that some bosses in the mould, e.g. every fifth boss, intended to form tooth bottoms in the gear rim are equipped with a guiding rule for guiding the helix during the moulding process, prior to the embedding of the helix.

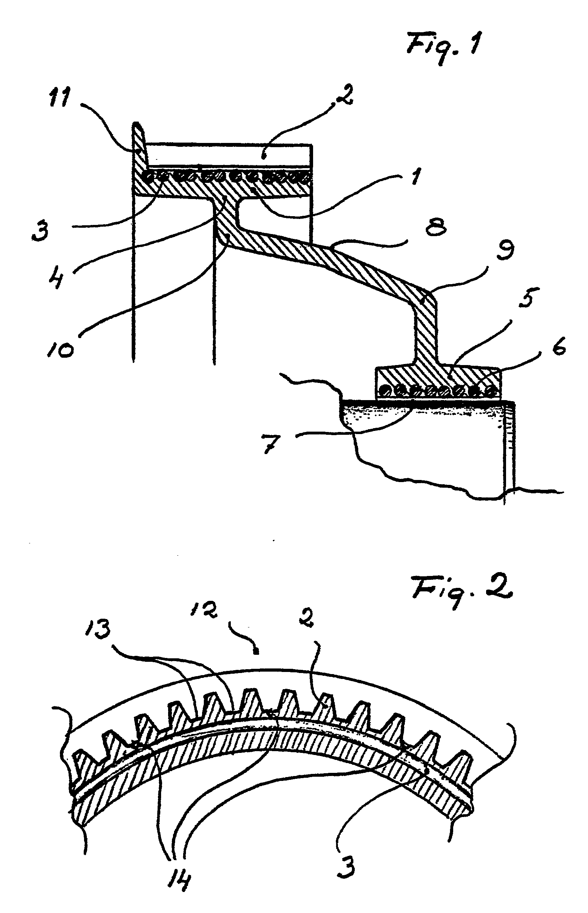

The invention hereinafter will be further described with reference to the accompany drawings, in which Fig. 1 in an axial section shows a gear according to the invention, and Fig. 2 shows a radial section of a portion of the mould, which gives the gear rim its share.

In Fig. 1 is shown a gear wheel incorporating a gear rim 1 with axially extending rule shaped teeth 2. In the gear rim adjacent its outer circumference there is inserted a helix 3 of steel. This helix is entirely embedded in the plastic moulding material 4, but can be seen in some tooth bottoms, e.g. each fifth.

The hub 5 of the gear wheel, such as shown in the figure, is axially displaced relative to the gear rim 1. The hub 5 is equipped with a steel helix 6 or the like at the inner surface 7. This allows the hub to be fitted with an invariable firm grip upon a shaft, which almost always is of steel.

The connecting portion 8 between the the gear rim 1 and the hub 5 has been given such a shape with two knees 9 and 10, that temperature variations can be easily absorbed without creation of any stresses. The plastic material of this and other portions may be reinforced with glass fibre or with other known material.

The gear rim 1 according to figure 1 as seen is also provided with a flange 11. This can be moulded directly in connection with the moulding of the entire wheel. From a manufacturing point of view it is also possible to mould a flange 11 on both sides of the gear rim.

In figure 2 is shown a portion of the mould for production of the gear wheel according to the invention. In the outer mould half 12 has been made bosses 13, which bosses are intended to delimit the tooth bottoms in the gear wheel rim 1. Such as shown in the figure each fifth boss 13 is provided with rules 14, which are intended to retain the inserted helix 3 in its position during the moulding operation. The helix 3 shall have a natural bigger diameter than the circumferential diameter delimited by the guiding rules 14. During moulding the helix 3 therefore will engage at a slight pressure against the rules 14, and the helix 3 will be entirely embedded in plastic material except for at the points of engagement with the rules 14.

By the present invention it is thus obtained a gear wheel, which has a low weight, which can be moulded directly and which is finished without precision machining and which without extra costs during the moulding can be provided with one or two flanges beside the gear rim. The gear wheel also has the same coefficient of thermal expansion as steel. It is essential that the mutual distances between the teeth are exactly equal. This is according to the invention achieved without any subsequent machining whatsoever. The moulding material must not consist of plastic material but can be e. g. aluminum.

## Claims

1. A gear wheel consisting of plastic material or a similar material having a high coefficient of thermal expansion, **wherein a reeinforcing means** is embedded in the gear rim (1) of the wheel radially inside the teeth (2)**, characterized in** that the reinforcing means is a helix (3) of steel or another material having a desired coefficient of thermal expansion, whereby the helix (3) has such a strength and dimension, that it determines the coefficient of thermal expansion of the gear rim (1) and the connecting portion (8) between the gear rim (1) and the hub (5) has such a shape that temperature variations can be easily absorbed without creation of any stresses in the gear rim.

2. A gear wheel as claimed in claim 1, **characterized therein**, that the hub (5) of the gear wheel is axially displaced in relation to the gear rim (1).

3. A gear wheel as claimed in claim 1 or 2, **characterized therein**, that also the hub (5) incorporates a helix (6) of steel or another material with a desired coefficient of thermal expansion and such a strength, that it has the ability of determining the coefficient of thermal expansion of the entire hub (5).

4. A method for producing gear as claimed in claim 1, **characterized therein**, that a helix (3) of a material having a desired coefficient of thermal expansion is inserted into a mould, having a somewhat smaller circumferential diameter than the helix (3), whereupon the mould is filled with the moulding material (4), which is brought to become stiff or to cure.

5. A method as claimed in claim 4, **characterized therein**, that prior to the embedding of the helix (3), some bosses (13) in the mould, intended to form tooth bottoms in the gear rim (1) are equipped with a guiding rule (14) for guiding the helix during the moulding process.

## Patentansprüche

1. Ein Zahnrad aus Kunststoff oder einem ähnlichen, einen großen Wärmedehnungskoeffizienten aufweisenden Werkstoff, bei dem radial unterhalb der Zähne (2) eines Zahnkranzes (1) des Zahnrades Verstärkungsmittel eingebettet sind, dadurch gekennzeichnet, daß die Verstärkungsmittel durch eine Wendel (3) aus Stahl oder einem anderen, einen erwünschten Wärmedehnungskoeffizienten besitzenden Werkstoff gebildet sind, wobei die Wendel (3) eine derartige Festigkeit und Abmessung hat, daß diese den Wärmedehnungskoeffizienten des Zahnkranzes (1) bestimmen, und ein zwischen dem Zahnkranz (2) und der Nabe (5) angeordneter Stegabschnitt (8) eine derartige Form aufweist, daß Temperaturänderungen ohne Erzeugung irgendwelcher Spannungen im Zahnkranz (1) leicht aufgenommen werden können.

2. Ein Zahnrad nach Anspruch 1, dadurch gekennzeichnet, daß die Nabe (5) des Zahnrades relativ zum Zahnkranz (1) in axialer Richtung versetzt angeordnet ist.

3. Ein Zahnrad nach Anspruch 1 oder 2, dadurch gekennzeichnet, daß in der Nabe (5) ebenfalls eine Wendel (6) aus Stahl oder einem anderen, einen erwünschten Wärmedehnungskoeffizienten besitzenden Werkstoff eingebettet ist, welcher eine derartige Festigkeit aufweist, daß die Wendel die Fähigkeit hat, den Wärmedehnungskoeffizienten der gesamten Nabe (5) zu bestimmen.

4. Ein Verfahren zum Herstellen eines Zahnrades gemäß Anspruch 1, dadurch gekennzeichnet, daß eine Wendel (3) aus einem einen geeigneten Wärmedehnungskoeffizienten aufweisenden Werkstoff in eine Gießform eingesetzt wird, welche einen etwas kleineren Umfangsdurchmesser als die Wendel (3) aufweist, anschließend die Gießform mit dem Gießwerkstoff (4) gefüllt wird, welcher dazu gebracht wird, hart zu werden oder auszuhärten.

5. Ein Verfahren nach Anspruch 4, dadurch gekennzeichnet, das vor dem Einbetten der Wendel (3) einige Vorsprünge (13), welche zum Einformen der Zahnfüße in den Zahnkranz (1) vorgesehen sind, mit einem Halteknopf (14) zum Halten der Wendel während des Gießvorgangs versehen werden.

## Revendications

1. Roue dentée constituée de matière plastique ou matériau similaire ayant un coefficient de dilatation thermique élevé et dans laquelle un moyen de renforcement est noyé dans la jante dentée (1) de la roue radialement à l'intérieur des dents (2) caractérisé en ce que le moyen de renforcement est une hélice (3) en acier ou en un autre matériau ayant un coefficient de dilatation thermique désiré, ladite hélice (3) ayant une résistance et une dimension telle qu'elle détermine le coefficient de dilatation thermique de la jante de la roue dentée (1) et la portion de liaison (8) entre la jante de la roue dentée (1) et le moyeu (5) ayant une forme telle que les variations de température peuvent être aisément absorbée sans création de contraintes dans la jante de la roue dentée.

2. Roue dentée suivant revendication 1 caractérisée en ce que le moyeu (5) de la roue dentée est décalé axialement par rapport à la jante de la roue dentée (1).

3. Roue dentée suivant revendication 1 ou 2 caractérisée en ce que le moyeu (5) comprend également une hélice (6) en acier ou en un autre matériau avec un coefficient de dilatation thermique désiré et une résistance telle qu'il puisse déterminer le coefficient de dilatation thermique de l'ensemble du moyeu (5).

4. Procédé de production d'une roue dentée suivant revendication 1, caractérisé en ce qu'une hélice (3) d'un matériau ayant un coefficient de dilatation thermique désiré est inséré dans un moule, ayant un diamètre légèrement plus petit que l'hélice (3), le moule étant alors rempli avec le matériau de moulage (4), qui est amené à durcir ou à polymériser.

5. Procédé suivant revendication 4, caractérisé en ce que avant le surmoulage de l'hélice (3), des bossages (13) dans le moule, destinés à former les fonds des dents sur la jante de la roue dentée (1) sont équipés d'une règle de guidage (14) pour guider l'hélice durant l'opération de moulage.

*Fig. 1*

*Fig. 2*